# EUROPÄISCHE PATENTSCHRIFT

(11) **EP 2 013 265 B1**
(45) Veröffentlichungstag und Bekanntmachung des Hinweises auf die Patenterteilung: **05.08.2009**
(21) Anmeldenummer: 07728414.9
(22) Anmeldetag: 23.04.2007
(51) Int. Cl.: C08G 77/26, C08G 77/20, C07F 7/10

(54) **ORGANOSILICIUMVERBINDUNGEN, DIE ß-KETOAMIDGRUPPEN UND ÜBER ENAMIN-BINDUNGEN GEBUNDENE ORGANISCHE POLYMERE ENTHALTEN, UND VERFAHREN ZU IHRER HERSTELLUNG**
ORGANOSILICON COMPOUNDS THAT CONTAIN ß-KETOAMIDE GROUPS AND ORGANIC POLYMERS BOUND VIA ENAMINE BONDS, AND METHOD FOR PRODUCING THEM
COMPOSÉS D'ORGANOSILICIUM CONTENANT DES GROUPES b-CÉTOAMIDE ET DES POLYMÈRES ORGANIQUES RELIÉS PAR DES LIAISONS ÉNAMINE ET PROCÉDÉ POUR LEUR PRÉPARATION

(30) Priorität: 04.05.2006 DE 102006020816
(43) Veröffentlichungstag der Anmeldung: 14.01.2009
(73) Patentinhaber: Wacker Chemie AG, 81737 München (DE)
(72) Erfinder: HERZIG, Christian, 83329 Waging Am See (DE); DORMEIER, Siegfried, 94166 Stubenberg (DE)
(74) Vertreter: Deffner-Lehner, Maria
(86) Internationale Anmeldenummer: PCT/EP2007/053958
(87) Internationale Veröffentlichungsnummer: WO 2007/128680

(56) Entgegenhaltungen:
- WO-A-20/07060089
- US-A- 4 808 649
- US-A- 5 952 443
- US-A- 6 121 404

## Beschreibung

Die Erfindung betrifft Organosiliciumverbindungen, die β-Ketoamid-gruppen und über Enamin-Bindungen gebundene organische Polymere enthalten, und Verfahren zu ihrer Herstellung.

In US 6121404 sind Siloxane beschrieben, die in einem Molekül Polyetherketten und Acetoacetatgruppen enthalten. Diese Polymere werden durch Hydrosilylierung von ungesättigten Polyethern mit Hydrogensiloxanen und nachfolgender Umsetzung der Zwischenstufe mit Diketen oder dessen aktiven Derivaten erhalten. Nach diesem Verfahren muss aufgrund der teilweisen Umlagerung von Allylpolyethern zum Propenylisomeren ein entsprechend hoher Überschuss eingesetzt werden, der nicht mehr zu entfernen ist. Auch dieser Überschuss wird mit Diketen umgesetzt, enthält dann auch die Acetoacetatgruppe, ist aber nicht an das Siloxan gebunden. Zur Hydrosilylierung sind teure Edelmetallkatalysatoren erforderlich. Die Acetoacetatgruppen sind auch im Hauptprodukt nicht direkt am Siloxan gebunden, sondern bilden die Endgruppen der zuvor addierten Polyether.

Verfahren zur Umsetzung von polymeren Verbindungen wie Polyether, Polyacetate, Polyetheracetale, Polyester, Polyesterpolyole mit Diketen oder Acetoacetaten sind in GB 1154726 und GB 1218509 offenbart. Die eingesetzten Polymere enthalten mindestens eine Carbinolgruppe, die Produkte dementsprechend mindestens eine Acetoacetylgruppe.

Es bestand die Aufgabe Organosiliciumverbindungen bereitzustellen, die sowohl einen hydrophilen organischen Rest als auch β-Ketoamidgruppen aufweisen, und über ein einfaches Verfahren hergestellt werden können, wobei die oben beschriebenen Nachteile vermieden werden sollen. Die Aufgabe wird durch die Erfindung gelöst.

Gegenstand der Erfindung sind Organosiliciumverbindungen (1), die mindestens einen Si-gebundenen Rest der allgemeinen Formel 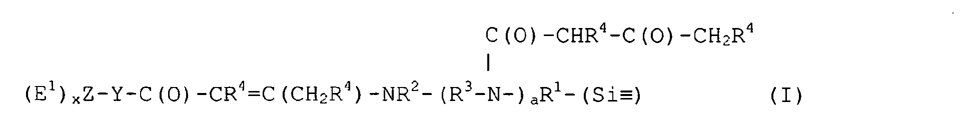 enthalten, wobei
-(Si≡) die Bindung zum Siliciumatom bedeutet,
R¹ ein zweiwertiger organischer Rest mit 1 bis 6 Kohlenstoffatomen, der gegebenenfalls von einander separate Stickstoffatome enthalten kann, vorzugsweise ein zweiwertiger Kohlenwasserstoffrest mit 1 bis 6 C-Atomen bedeutet, der gegebenenfalls ein oder mehrere von einander separate Stickstoffatome enthalten kann,
R² ein Wasserstoffatom oder ein organischer Rest mit 1 bis 30 C-Atomen bedeutet, vorzugsweise ein Wasserstoffatom oder ein Kohlenwasserstoffrest mit 1 bis 30 C-Atomen bedeutet,
R³ einen zweiwertigen organischen Rest mit 1 bis 6 Kohlenstoffatomen, vorzugsweise mit 2 bis 6 Kohlenstoffatomen, bevorzugt einen zweiwertigen Kohlenwasserstoffrest mit 2 bis 6 Kohlenstoffatomen bedeutet,
R⁴ ein Wasserstoffatom oder ein Kohlenwasserstoffrest mit 1 bis 18 C-Atomen ist,
Y Sauerstoff oder -NR²- ist, vorzugsweise Sauerstoff ist,
Z ein zwei- bis sechswertiger organischer Rest mit einer monomeren, oligomeren oder polymeren Struktur ist, der einen gewichtsmäßigen Heteroatomgehalt von mindestens 10 % hat, der über C-Atome gebunden ist,
E¹ eine monofunktionelle Endgruppe oder ein Si-C-gebundener Rest der allgemeinen Formel 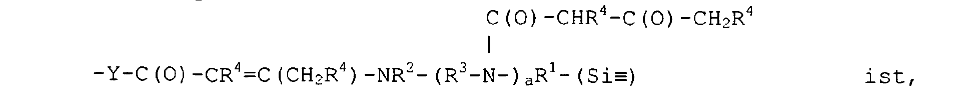
a eine ganze Zahl von 1 bis 5, vorzugsweise 1 oder 2 ist und
x 0 oder eine ganze Zahl von 1 bis 5 ist, vorzugsweise 0 oder 1 ist, bevorzugt 1 ist.

Gegenstand der Erfindung ist weiterhin ein Verfahren zur Herstellung der Organosiliciumverbindungen (1), die mindestens einen Si-gebundenen Rest der allgemeinen Formel 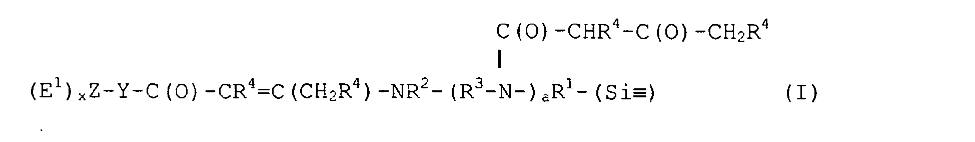 enthalten, wobei
R¹, R², R³, R⁴, Y, Z, E¹, a und x die oben dafür angegebene Bedeutung haben,
   indem in einer ersten Stufe
   Aminosiliciumverbindungen (2), die mindestens eine Si-C gebundene Aminogruppe A der allgemeinen Formel enthalten

   HNR²-(R³-NH-)ₐR¹-(Si≡) (II)

   mit Verbindungen (3), die mindestens einen β-Ketocarbonylfunktionellen Rest enthalten, der allgemeinen Formel

   (E²)ₓZ-Y-C(O)-CR⁴=C(CH₂R⁴)-OH (IIIa)

   oder

   (E²)ₓZ-Y-C(O)-CHR⁴-C(O)-CH₂R⁴ (IIIb)

   umgesetzt werden, wobei
   Organosiliciumverbindungen (1') der allgemeinen Formel

   (E²)ₓZ-Y-C(O)-CR⁴=C(CH₂R⁴)-NR²-(R³-NH-)ₐR¹- (Si≡) (I'),

   erhalten werden, wobei
R¹, R², R³, R⁴, Y, Z, a und x die oben dafür angegebene Bedeutung haben, und
E² eine monofunktionelle Endgruppe oder ein Rest der allgemeinen Formel -Y-C(O)-CR⁴=C(CH₂R⁴)-OH oder -Y-C(O)-CHR⁴-C(O)-CH₂R⁴ ist,
   und in einer zweiten Stufe
   die in der ersten Stufe erhaltenen Organosiliciumverbindungen (1')
   mit Diketenen (4) der allgemeinen Formel 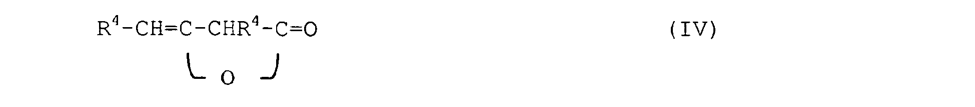 umgesetzt werden, wobei
R⁴ die oben dafür angegebene Bedeutung hat.

Bei dem erfindungsgemäßen Verfahren werden die Aminosiliciumverbindungen (2) in einer ersten Stufe mit Acetoacetylverbindungen (3) der tautomeren Formen (IIIa) oder (IIIb) umgesetzt und in einer nachfolgenden zweiten Stufe mit Diketenen (4) umgesetzt. Diese Reaktionsfolge kann vorteilhaft in einem Eintopfverfahren ausgeführt werden. Eine besonders bevorzugte Verfahrensweise ist die vorgelagerte Herstellung von Verbindung (3) aus den zugrunde liegenden Basisverbindungen (5) durch Umsetzung von diesen mit Diketenen (4), wonach bei Umsatzende Aminosiliciumverbindungen (2) zudosiert werden und danach durch weiteres Zudosieren von Diketenen (4) nach deren Umsatz die erfindungsgemäßen Organosiliciumverbindungen (1) in einem besonders wirtschaftlichen Verfahren erhalten werden.

Bevorzugte Beispiele für Si-C gebundene Aminogruppen A der Formel (II) sind

H₂N-C₂H₄-NH-CH₂-

H₂N-C₃H₆-NH-CH₂-

H₂N-C₃H₆-NH-C₃H₆-NH-CH₂-

H₂N-C₂H₄-NH-C₃H₆-

H₂N-C₃H₆-NH-C₃H₆-

H₂N-C₂H₄-NH-C₂H₄-NH-C₃H₆-

H₂N-C₃H₆-NH-C₃H₆-NH-C₃H₆-

H₂N-C₂H₄-NH-C₄H₈-

R² ist bevorzugt ein Wasserstoffatom.
R³ ist besonders bevorzugt ein Alkylenrest mit 2 bis 6 Kohlenstoffatomen.
R⁴ ist bevorzugt ein Wasserstoffatom.
Z hat bevorzugt einen gewichtsmäßigen Heteroatomgehalt von mindestens 20 % und besonders bevorzugt mindestens 25 %.

Aminosiliciumverbindungen (2) sind vorzugsweise Organopolysiloxane mit mindestens einem Si-C gebundenen Rest A der Formel (II).

Bevorzugt als Aminosiliciumverbindungen (2) sind Organopolysiloxane der allgemeinen Formel

A_{g}R_{3-g}SiO(SiR₂O)ₗ(SiRAO)ₖSiR_{3-g}A_{g} (V),

wobei A die oben dafür angegebene Bedeutung hat,
R ein einwertiger Kohlenwasserstoffrest mit 1 bis 18 C-Atomen bedeutet,
g 0 oder 1,
k 0 oder eine ganze Zahl von 1 bis 30 ist und
1 0 oder eine ganze Zahl von 1 bis 1000 ist,
mit der" Maßgabe, dass mindestens ein Rest A je Molekül enthalten ist.

Bevorzugt enthalten Aminosiliciumverbindungen (2) Amingruppenkonzentrationen im Bereich von 0,01 bis ca. 10mequiv./g, besonders von ca. 0,05 bis 5 mequiv./g. Bevorzugte Viskositäten sind im Bereich von ca. 100 bis 50 000 mPa·s bei 25°C, wobei der Bereich 500 bis 10 000 mPa·s bei 25°C besonders bevorzugt ist.

Bevorzugt werden die Aminosiliciumverbindungen (2) ohne vorherige Umwandlung der Aminogruppen mittels Schutzgruppenreagenzien wie Aldehyde oder Ketone eingesetzt.

Bevorzugt werden die Aminosiliciumverbindungen (2) aus "Diamino"-Monomeren, wie Aminoethylaminopropyl- oder Aminoethylaminoisobutylsilanen hergestellt, wobei die Si-C gebundene Aminogruppe A sowohl einen primären als auch einen sekundären Aminrest, gebunden am selben Si-Atom, enthält. Bevorzugt reagieren in den Resten A die primären Aminreste mit den Verbindungen (3), wobei die sekundären Aminreste als basische Zentren erhalten bleiben.

Die Verbindungen (3) können als Reaktionspartner für die Aminosiliciumverbindung (2) in zwei tautomeren Formen der Formel (IIIa) und (IIIb) eingesetzt werden.

Die Verbindungen (3) werden vorzugsweise erhalten, indem die zugrunde liegenden Basisverbindungen (5) der Formel (E²)ₓZ-Y (VI), die an den freien Valenzen mit Wasserstoff abgesättigt sind,
wobei E², Z und Y die oben dafür angegebene Bedeutung haben, mit Diketenen, Acetylketenen, Alkyldiketenen, Diketen-Acetonaddukten oder Acetoacetaten, bevorzugt mit Diketenen oder dessen Acetonaddukten, nach in der Literatur bekannten Verfahren umgesetzt werden.

Der Rest "Z" wird definiert als organischer Rest, der aufgrund seiner Bi- bis Hexafunktionalität mit 2 bis 6 weiteren Gruppen E oder Y verbunden ist: Die Summe aus "E" plus "Y" entspricht in ihrem Zahlenwert dieser Bi- bis Hexafunktionalität. Im einfachsten Fall, der auch bevorzugt ist, ist "Z" bifunktionell, d.h. zweiwertig. In diesem Fall ist "Z" entweder an zwei Y-Gruppen oder an eine Y-Gruppe und eine monofunktionelle Endgruppe gebunden. Monofunktionelle Endgruppen können gesättigte oder ungesättigte Kohlenwasserstoffreste mit 1 bis 18 C-Atomen sein, oder auch Acylreste wie der Acetat-. Butyrat-, Palmitat- oder Stearatrest, wie auch der Acrylat-, Methacrylat- oder der Benzoatrest.

Der Rest "Z" hat einen Heteroatomgehalt von mindestens 10 Gew.-%. Heteroatome sind ausgewählt aus der Gruppe der O-, N-, B-, P- und S-Atome; bevorzugt O- und N-Atome, besonders bevorzugt O-Atome. Der Rest "Z" hat die Aufgabe, höhere Polarität und damit ein höheres Maß an Hydrophilie in die erfindungsgemäßen Organosiliciumverbindungen (1) einzubringen, weshalb ein höherer Gehalt an Heteroatomen bevorzugt ist. Besonders bevorzugt ist der Rest "Z" ein Polyether oder Polyester. Beispiele für Polyether sind Polyethylenoxid, Polypropylenoxid oder Polybutylenoxid (auch poly-THF) sowie auch Mischpolymerisate der allg. Formel (CₐH₂ₐO)ₙCₐH₂ₐ mit a = 2, 3 oder 4 und n eine ganze Zahl von 1 bis 500, bevorzugt von 1 bis 100 und besonders bevorzugt von 5 bis 60.

Tri- bis hexafunktionelle Reste "Z" werden normalerweise von ebenso funktionellen Alkoholen wie auch von Aminen gestartet. So liefert Trimethylolpropan oder Ammoniak mit Ethylenoxid Basisverbindungen (5) mit "Z" der allgemeinen Formel C₂H₅C[CH₂(OC₂H₄)_{m/3}]₃ oder N[C₂H₄(OC₂H₄)_{(m-1)/3}]₃, wobei m die Gesamtzahl der Mole Ethylenoxid bedeutet, vorzugsweise 5 bis 100 ist, deren freie Valenzen mit Sauerstoffatomen (Y) verbunden sind, die ihrerseits mit Wasserstoff abgesättigt sind. Zur Herstellung von Basisverbindungen (5) mit höherer Funktionalität werden üblicherweise die entsprechend höher funktionalisierten Carbinol- oder Aminoverbindungen verwendet: Tetrafunktionalität aus Pentaerythrit oder Ethylendiamin, Hexafunktionalität aus Sorbit oder Tris-(aminoethyl)amin.

Entsprechende Polyester können aus gleichen oder ähnlichen Starterverbindungen durch Ringöffnungspolymerisation von cyclischen Estern (Lactonen) nach allgemein bekannten Verfahren hergestellt werden. Bevorzugte Basisverbindungen (5) sind Polyethylenglycol, Polypropylenglycol und deren Mischpolymerisate, sowie deren Monoalkylether. Letztere sind ein Spezialfall mit "Y" gleich Sauerstoff und "E" gleich eine Alkylgruppe (Methyl, Butyl) . Bezüglich der Umsetzung zu Verbindungen (3), sind diese Basisverbindungen (5) monofunktionell. Gegenüber den Aminosiliciumverbindungen (2) sind die daraus hergestellten Verbindungen (3) ebenso monofunktionell und dienen demnach zur Absättigung von Aminogruppen mit polaren Polymeren.

Im Gegensatz dazu erhält man aus Polyalkylenglycolen bifunktionelle Reaktionspartner (3), die gegenüber ebenfalls bifunktionellen Aminosiliciumverbindungen (2), d.h. die zwei Aminogruppen A pro Molekül enthalten, kettenverlängernd wirken. Auf diese Weise können auch verzweigte Produkte (1) erhalten werden, sofern die Aminosiliciumverbindungen (2) mindestens drei Aminogruppen A pro Molekül enthalten. Es entsteht eine alternierende Siloxan-Polyetherstruktur.

Die überraschend hohe Selektivität der Verbindungen (3) mit primären Aminresten in den Aminogruppen A der Aminosiliciumverbindungen (2) erlaubt eine praktisch vollständige Umsetzung der H₂N-Reste zu Enaminen, weshalb in der ersten Stufe des erfindungsgemäßen Verfahrens bevorzugt ein stöchiometrisches Verhältnis von primären NH₂-Resten in Aminogruppen A von Verbindungen (2) zu Acetoacetyl-Gruppen in Verbindungen (3) in der Nähe von 1,0 eingesetzt wird. Besonders bevorzugt ist dieses Verhältnis 0,8 bis 1,0. Es kann allerdings auch über 1,0 liegen. In diesem Fall werden nicht alle primären Aminreste umgesetzt, die dann aber zusätzlich zur Umsetzung mit Diketenen (4) zur Verfügung stehen. Diese Vorgehensweise ist zwar technisch möglich, aber nicht bevorzugt.

Bei dem erfindungsgemäßen Verfahren können als Diketene (4) auch deren Acetonaddukte eingesetzt werden. Bevorzugt werden als Diketene (4) 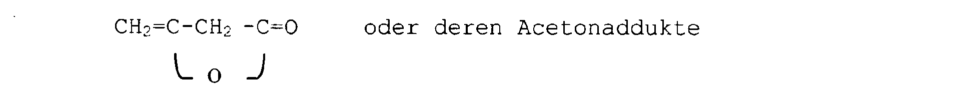 eingesetzt.

In dem erfindungsgemäßen Verfahrens beträgt bei der anschließenden Umsetzung mit Diketenen (4) das stöchiometrische Verhältnis von sekundären -NH-Gruppen in Aminogruppen A von Verbindungen (2) zu Diketenen (4) 5:1 bis 0,5:1, bevorzugt 2:1 bis 0,8:1. Besonders bevorzugt ist ein Verhältnis von ca. 1:1.

Das erfindungsgemäße Verfahren kann in Gegenwart von organischen Lösungsmitteln erfolgen oder die erfindungsgemäßen Produkte (1) können mit organischen Lösungsmitteln verdünnt werden.

Die Umsetzung der Verbindungen (3) mit Aminosiliciumverbindungen (2) in der ersten Stufe des erfindungsgemäßen Verfahrens läuft spontan auch ohne externe Erwärmung ab, doch wirkt sich Wärmezufuhr beschleunigend auf die Synthese von (1) aus.

Das erfindungsgemäße Verfahren wird vorzugsweise bei Temperaturen von 10 bis 100°C, bevorzugt 40 bis 80°C, durchgeführt. Weiterhin wird das erfindungsgemäße Verfahren vorzugsweise beim Druck der umgebenden Atmosphäre durchgeführt, kann aber auch bei höheren und niedrigeren Drücken durchgeführt werden.

### Beispiel 1:

411 g eines Acetoacetylpolyethers, hergestellt aus einem monofunktionellen Polyether der Formel C₄H₉O(C₂H₄O)₁₈,₀(C₃H₆O)_{17,4}H und Diketen, mit einer Acetoacetylkonzentration von 0,51 mequiv./g werden mit 250 g eines Copolymerisats aus Aminoethylaminopropyl-methylsiloxan- und Dimethylsiloxaneinheiten der Viskosität 830 mm²/s (25°C) und einer Aminzahl von 1,597 gemischt und unter Rühren auf 70°C erwärmt. Damit wird eine Stöchiometrie von H₂N/Acetoacetyl von 0,95 eingestellt. Das stark trübe Gemisch klart nach ca. 20 Minuten auf. Zwei Stunden Nachreaktion bei gleicher Temperatur führt zu starker Viskositätserhöhung, die durch Zugabe von 70 g Isopropanol erheblich gemildert wird. Zudosieren von 16,8 g Diketen führt umgehend zu einer deutlich exothermen Reaktion mit weiterer Viskositätserhöhung. Es werden weitere 156 g Isopropanol zugesetzt und langsam eingerührt. Man erhält eine 75%-ige Lösung eines Siliconpolymers, das über Enamin gepfropfte Polyetherketten und gleichzeitig auch β-Ketoamidogruppen enthält. Die Lösung enthält 0,22 mequ. dieser Gruppen pro g. Die Polymerlösung ist klar mit Wasser mischbar.

### Beispiel 2:

116 g eines PEG-1000-bis(acetoacetats) mit einem durchschnittlichen Molekulargewicht von 1106 g werden bei 70°C aufgeschmolzen. Bei gleicher Temperatur werden 263 g eines α,ω-Bis(aminoethylaminopropyl)-dimethylpolysiloxans zudosiert. Die Viskosität des Gemisches steigt erheblich an und es klart auf. Nach weiteren 3 Stunden bei 70°C dosiert man 8,4 g Diketen ein, worauf in exothermer Reaktion weitere Viskositätserhöhung folgt. Nach Abkühlung erhält man ein hochviskoses Öl mit einem Acetoacetamidgehalt von 0,26 mequ./g und der gleichen Konzentration an Acetoacetatgruppen aus dem eingesetzten Polyetherüberschuss. Eine 80%-ige Lösung des Polymers in Butyldiglycol lässt sich ohne stärkere Scherung in gleicher Menge Wasser dispergieren.

## Patentansprüche

1. Organosiliciumverbindungen (1), die mindestens einen Si-gebundenen Rest der allgemeinen Formel 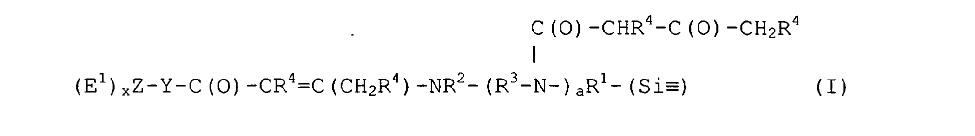 enthalten, wobei
-(Si≡) die Bindung zum Siliciumatom bedeutet,
R¹ ein zweiwertiger organischer Rest mit 1 bis 6 Kohlenstoffatomen, der gegebenenfalls von einander separate Stickstoffatome enthalten kann,
R² ein Wasserstoffatom oder ein organischer Rest mit 1 bis 30 C-Atomen bedeutet,
R³ einen zweiwertigen organischen Rest mit 1 bis 6 Kohlenstoffatomen bedeutet,
R⁴ ein Wasserstoffatom oder ein Kohlenwasserstoffrest mit 1 bis 18 C-Atomen ist,
Y Sauerstoff oder -NR²- ist,
Z ein zwei- bis sechswertiger organischer Rest mit einer monomeren, oligomeren oder polymeren Struktur ist, der einen gewichtsmäßigen Heteroatomgehalt von mindestens 10% hat, der über C-Atome gebunden ist,
E¹ eine monofunktionelle Endgruppe oder ein Si-C-gebundener Rest der allgemeinen Formel 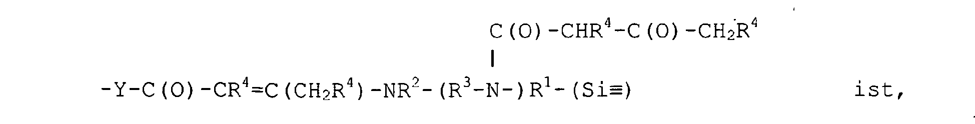
a eine ganze Zahl von 1 bis 5 ist und
x 0 oder eine ganze Zahl von 1 bis 5 ist.

2. Organosiliciumverbindungen (1) nach Anspruch 1, **dadurch gekennzeichnet, dass** R² ein Wasserstoffatom ist.

3. Organosiliciumverbindungen (1) nach Anspruch 1 oder 2, **dadurch gekennzeichnet, dass** R⁴ ein Wasserstoffatom ist.

4. Organosiliciumverbindungen (1) nach Anspruch 1, 2 oder 3, **dadurch gekennzeichnet, dass** x 0 oder 1 ist.

5. Organosiliciumverbindungen (1) nach Anspruch 1, 2 oder 3, **dadurch gekennzeichnet, dass** Z ein Polyether- oder Polyester-rest ist.

6. Verfahren zur Herstellung von Organosiliciumverbindungen (1), die mindestens einen Si-gebundenen Rest der allgemeinen Formel 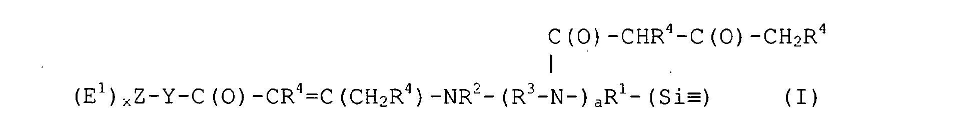 enthalten, wobei
R¹, R², R³, R⁴, Y, Z, E¹, a und x die im Anspruch 1 dafür angegebene Bedeutung haben,
indem in einer ersten Stufe
Aminosiliciumverbindungen (2), die mindestens eine Si-C gebundene Aminogruppe A der allgemeinen Formel enthalten
HNR²-(R³-NH-)ₐR¹-(Si≡) (II)
mit Verbindungen (3), die mindestens einen β-Ketocarbonylfunktionellen Rest enthalten, der allgemeinen Formel
(E²)ₓZ-Y-C(O)-CR⁴=C(CH₂R⁴)-OH (IIIa)
oder
(E²)ₓZ-Y-C(O)-CHR⁴-C(O)-CH₂R⁴ (IIIb)
umgesetzt werden, wobei
Organosiliciumverbindungen (1') der allgemeinen Formel
(E²)ₓZ-Y-C(O)-CR⁴=C(CH₂R⁴)-NR²-(R³-NH-)ₐR¹-(Si≡) (I'),
erhalten werden, wobei
R¹, R², R³, R⁴, Y, Z, E¹, a und x die im Anspruch 1 dafür angegebene Bedeutung haben, und
E² eine monofunktionelle Endgruppe oder ein Rest der allgemeinen Formel
-Y-C(O)-CR⁴=C(CH₂R⁴)-OH oder -Y-C(O)-CHR⁴-C(O)-CH₂R⁴ ist, und in einer zweiten Stufe
die in der ersten Stufe erhaltenen
Organosiliciumverbindungen (1')
mit Diketenen (4) der allgemeinen Formel 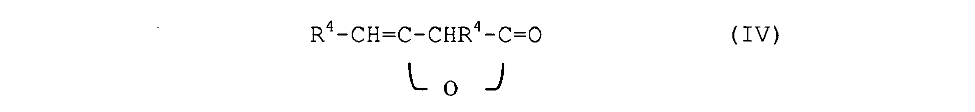 umgesetzt werden, wobei
R⁴ die oben dafür angegebene Bedeutung hat.

7. Verfahren nach Anspruch 6, **dadurch gekennzeichnet, dass** die Aminogruppe A in Verbindung (2) ein Aminoethylaminopropylrest ist.

8. Verfahren nach Anspruch 6 oder 7, **dadurch gekennzeichnet, dass** als Aminosiliciumverbindungen (2) Organopolysiloxane der allgemeinen Formel
A_{g}R_{3-g}SiO(SiR₂O)ₗ(SiRAO)ₖSiR_{3-g}A_{g} (V),
wobei A die oben dafür angegebene Bedeutung hat,
R ein einwertiger Kohlenwasserstoffrest mit 1 bis 18 C-Atomen bedeutet,
g 0 oder 1,
k 0 oder eine ganze Zahl von 1 bis 30 ist und
l 0 oder eine ganze Zahl von 1 bis 1000 ist,
mit der Maßgabe, dass mindestens ein Rest A je Molekül enthalten ist, eingesetzt werden.

9. Verfahren nach Anspruch 6, 7 oder 8, **dadurch gekennzeichnet, dass** als Diketene (4) 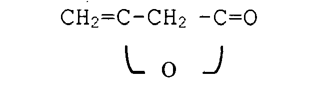 oder deren Acetonaddukte
eingesetzt werden.

## Claims

1. Organosilicon compounds (1) which contain at least one Si-bonded radical of the general formula 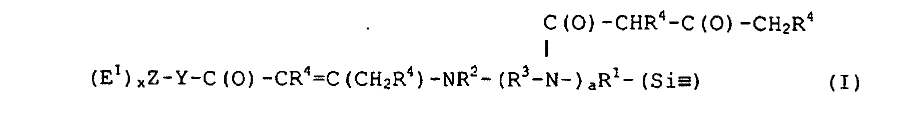 in which
-(Si=) is the bond to the silicon atom,
R¹ is a divalent organic radical having 1 to 6 carbon atoms which may optionally contain nitrogen atoms separate from one another,
R² is a hydrogen atom or an organic radical having 1 to 30 C atoms,
R³ is a divalent organic radical having 1 to 6 carbon atoms,
R⁴ is a hydrogen atom or a hydrocarbon radical having 1 to 18 C atoms,
Y is oxygen or -NR²-,
Z is a divalent to hexavalent organic radical having a monomeric, oligomeric or polymeric structure, which has a heteroatom content of at least 10% by weight and is bonded via C atoms,
E¹ is a monofunctional terminal group or an Si-C-bonded radical of the general formula 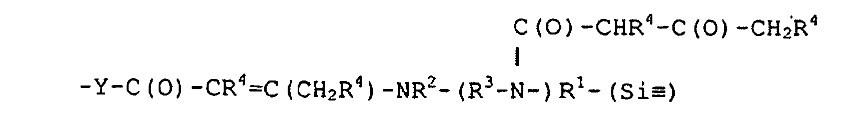
a is an integer from 1 to 5, and
x is 0 or an integer from 1 to 5.

2. Organosilicon compounds (1) according to Claim 1, **characterized in that** R² is a hydrogen atom.

3. Organosilicon compounds (1) according to Claim 1 or 2, **characterized in that** R⁴ is a hydrogen atom.

4. Organosilicon compounds (1) according to Claim 1, 2 or 3, **characterized in that** x is 0 or 1.

5. Organosilicon compounds (1) according to Claim 1, 2 or 3, **characterized in that** Z is a polyether or polyester radical.

6. Method for producing organosilicon compounds (1) which contain at least one Si-bonded radical of the general formula 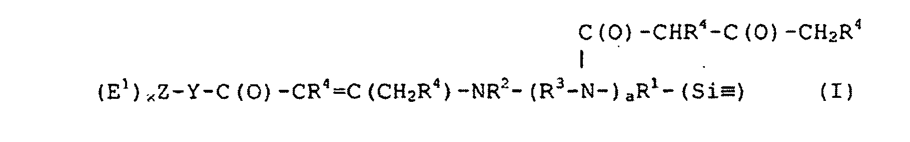 in which
R¹ , R² , R³ , R⁴ , Y, Z , E¹, a and x have the meanings stated therefor in Claim 1,
in which, in a first stage,
aminosilicon compounds (2) which contain at least one Si-C-bonded amino group A of the general formula
HNR²-(R³-NH-)ₐR¹-(Si≡) (II)
are reacted with compounds (3) which contain at least one β-ketocarbonyl functional radical, of the general formula
(E²)ₓZ-Y-C (O) -CR⁴=C(CH₂R⁴) -OH (IIIa)
or
(E²)ₓZ-Y-C(O) -CHR⁴-C(O) -CH₂R⁴ (IIIb),
organosilicon compounds (1') of the general formula
(E²)ₓZ-Y-C(O)-CR⁴=C(CH₂R⁴)-NR²-(R³-NH-)ₐR¹-(Si≡) (I')
being obtained, in which
R¹, R², R³, R⁴, Y, Z, E¹, a and x have the meanings stated therefor in Claim 1, and
E² is a monofunctional terminal group or a radical of the general formula
-Y-C(O)-CR⁴=C(CH₂R⁴)-OH or -Y-C(O)-CHR⁴-C(O)CH₂R⁴, and, in a second stage,
the organosilicon compounds (1') obtained in the first stage are reacted with diketenes (4) of the general formula 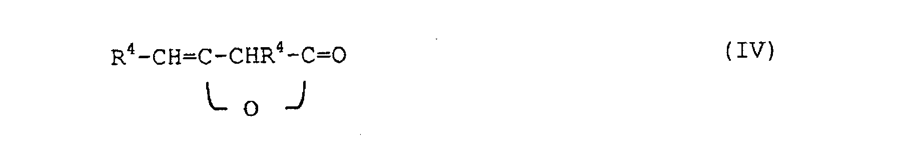 in which
R⁴ has the meanings stated above therefor.

7. Method according to Claim 6, **characterized in that** the amino group A in compound (2) is an aminoethylaminopropyl radical.

8. Method according to Claim 6 or 7, **characterized in that** the aminosilicon compounds (2) used are organopolysiloxanes of the general formula
A_{g}R_{3-g}SiO(SiR₂O)ₗ(SiRAO)ₖSiR_{3-g}A_{g} (V)
in which A has the meaning stated above therefor,
R is a monovalent hydrocarbon radical having 1 to 18 C atoms,
g is 0 or 1,
k is 0 or an integer from 1 to 30 and
1 is 0 or an integer from 1 to 1000,
with the proviso that at least one radical A per molecule is present.

9. Method according to Claim 6, 7 or 8, **characterized in that** 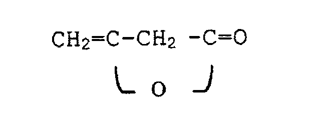 or the acetone adducts thereof
are used as diketenes (4).

## Revendications

1. Composés organosiliciés (1) qui contiennent au moins un radical lié au silicium, de formule générale 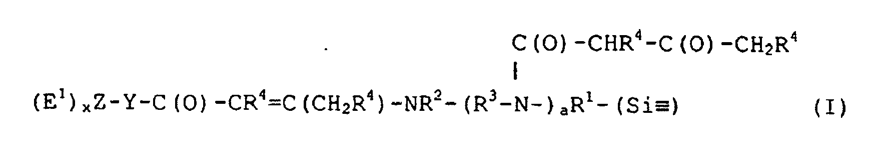 dans laquelle
-(Si≡) représente la liaison à l'atome de silicium,
R¹ représente un radical organique divalent ayant de 1 à 6 atomes de carbone, qui peut éventuellement contenir des atomes d'azote séparés les uns des autres,
R² représente un atome d'hydrogène ou un radical organique ayant de 1 à 30 atomes de carbone,
R³ représente un radical organique divalent ayant de 1 à 6 atomes de carbone,
R⁴ est un atome d'hydrogène ou un radical hydrocarboné ayant de 1 à 18 atomes de carbone,
Y est un atome d'oxygène ou -NR²-,
Z est un radical organique divalent à hexavalent ayant une structure monomère, oligomère ou polymère, qui a une teneur pondérale en hétéroatomes d'au moins 10 %, qui est lié par des atomes de carbone,
E¹ est un groupe monofonctionnel en bout de chaîne ou un radical lié à Si-C, de formule générale 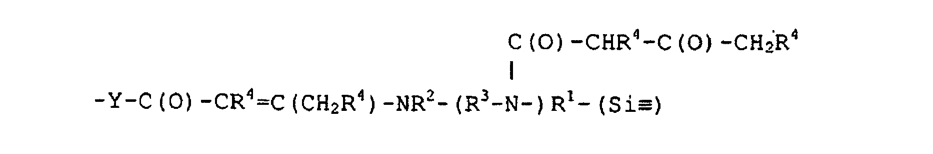
a est un nombre entier allant de 1 à 5 et
x est 0 ou un nombre entier allant de 1 à 5.

2. Composés organosiliciés (1) selon la revendication 1, **caractérisés en ce que** R² est un atome d'hydrogène.

3. Composés organosiliciés (1) selon la revendication 1 ou 2, **caractérisés en ce que** R⁴ est un atome d'hydrogène.

4. Composés organosiliciés (1) selon la revendication 1, 2 ou 3, **caractérisés en ce que** x est 0 ou 1.

5. Composés organosiliciés (1) selon la revendication 1, 2 ou 3, **caractérisés en ce que** Z est un reste de polyéther ou polyester.

6. Procédé pour la préparation de composés organosiliciés (1) qui comportent au moins un radical lié au silicium, de formule générale 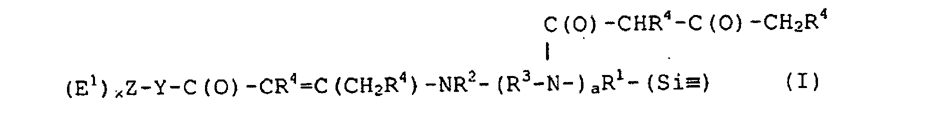 dans laquelle R¹, R², R³, R⁴, Y, Z, E¹, a et x ont les significations données pour ces symboles dans la revendication 1,
par, dans une première étape,
mise en réaction de composés aminosiliciés (2) qui comportent au moins un groupe amino A lié à Si-C, de formule générale
HNR²- (R³-NH-)ₐR¹- (Si≡) (II)
avec des composés (3) qui contiennent au moins un radical à fonction β-cétocarbonyle, de formule générale
(E²)ₓZ-Y-C(O)-CR⁴=C(CH₂R⁴)-OH (IIIa)
ou
(E²)ₓZ-Y-C(O)-CHR⁴-C(O)-CH₂R⁴ (IIIb)
pour l'obtention de composés organosiliciés (1') de formule générale
(E²)ₓZ-Y-C(O)-CR⁴=C(CH₂R⁴)-NR²-(R³-NH-)ₐR²- (Si≡)
dans laquelle
R¹, R², R³, R⁴, Y, Z, E¹, a et x ont les significations données dans la revendication 1 pour ces symboles, et
E² est un groupe monofonctionnel en bout de chaîne ou un radical de formule générale
-Y-C(O)-CR⁴=C(CH₂R⁴)-OH ou -Y-C(O)-CHR⁴-C(O)-CH₂R⁴, et dans une deuxième étape,
mise en réaction des composés organosiliciés (1') obtenus dans la première étape, avec des dicétènes (4) de formule générale 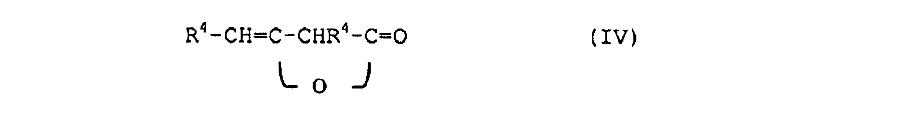 dans laquelle R⁴ a la signification donnée plus haut pour ce symbole.

7. Procédé selon la revendication 6, **caractérisé en ce que** le groupe amino A dans le composé (2) est un radical aminoéthylaminopropyle.

8. Procédé selon la revendication 6 ou 7, **caractérisé en ce qu'**on utilise comme composés organosiliciés (2) des organopolysiloxanes de formule générale
A_{g}R_{3-g}SiO(SiR₂O)ₗ(SiRAO)ₖSiR_{3-g}A_{g} (V),
dans laquelle A a la signification donnée plus haut pour ce symbole,
R représente un radical hydrocarboné monovalent ayant de 1 à 18 atomes de carbone,
g est 0 ou 1,
k est 0 ou un nombre entier allant de 1 à 30 et
1 est 0 ou un nombre entier allant de 1 à 1 000,
étant entendu qu'au moins un radical A est contenu par molécule.

9. Procédé selon la revendication 6, 7 ou 8, **caractérisé en ce qu'**on utilise comme dicétènes (4) 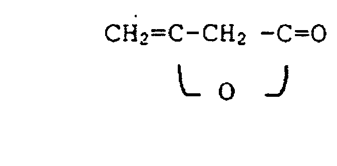 ou ses adduits avec l'acétone.
